Europäisches Patentamt

European Patent Office

Office européen des brevets

(19)

(11) Numéro de publication: **0 159 227**
**B1**

(12) # FASCICULE DE BREVET EUROPÉEN

(45) Date de publication du fascicule du brevet:
21.06.89

(51) Int. Cl.⁴: **H 04 Q 3/52,** G 02 F 1/315,
G 02 B 26/08

(21) Numéro de dépôt: 85400480.1

(22) Date de dépôt: 13.03.85

(54) **Sélecteur optique.**

(30) Priorité: 13.03.84 FR 8403803

(43) Date de publication de la demande:
23.10.85 Bulletin 85/43

(45) Mention de la délivrance du brevet:
21.06.89 Bulletin 89/25

(84) Etats contractants désignés:
BE DE FR GB IT NL SE

(56) Documents cité:
EP-A-0 090 723
US-A-3 612 653

APPLIED OPTICS, vol. 21, no. 8, 15 avril 1982, pages
1386-1393, Optical Society of America, New York,
US; R.A. SOREF: "Electrooptic 3 x 4 matrix switch
for multimode fiber-optic systems"

(73) Titulaire: **THOMSON- CSF TELEPHONE, 146,
Boulevard de Valmy, F-92707 Colombes (FR)**

(72) Inventeur: **Fiorese, Serge, c/o THOMSON- CSF
TELEPHONE/DCP 46 Quai A. Le Gallo, F-92100
Boulogne Billancourt (FR)**
Inventeur: **Raillard, Yves, c/o THOMSON- CSF
TELEPHONE/DCP 46 Quai A. Le Gallo, F-92100
Boulogne Billancourt (FR)**
Inventeur: **Rey, Alain, c/o THOMSON- CSF
TELEPHONE/DCP 46 Quai A. Le Gallo, F-92100
Boulogne Billancourt (FR)**

(74) Mandataire: **Weinmiller, Jürgen, Lennéstrasse 9
Postfach 24, D-8133 Feldafing (DE)**

## Description

La présente invention concerne un sélecteur optique permettant d'aiguiller un faisceau lumineux reçu sur une entrée, vers une sortie choisie parmi N.

Un tel sélecteur est particulièrement utile pour réaliser des fonctions telles que la commutation, la distribution et la sélection de signaux large bande véhiculés sur des fibres optiques.

Il est connu de réaliser des sélecteurs optiques en mettant en cascade des cellules de commutation optique élémentaires à une entrée et deux sorties.

De telles cellules de commutation optique élémentaires peuvent par exemple opérer par réflexion, suivant deux directions possibles, d'un faisceau lumineux incident. Il en est ainsi des cellules fonctionnant par déplacement de prismes ou de miroirs, connues de l'art antérieur.

De telles cellules de commutation optique élémentaires peuvent également opérer par réflexion, avec changement de direction, ou par transmission, sans changement de direction, d'un faisceau lumineux incident ayant une direction donnée. Il en est ainsi des cellules à cristaux liquides, connues de l'art antérieur.

Il en est également ainsi des cellules fonctionnant par déplacement d'une goutelette de liquide entre deux lames de verre sous l'effet d'un champ électrique, permettant de rendre un faisceau lumineux incident, soit réfléchi par réflexion totale si la goutelette n'est pas sur le trajet optique, soit transmis si la goutelette est centrée sur le trajet optique, le faisceau émergeant étant alors parallèle au faisceau incident. Des cellules de ce type ont fait l'objet des demandes de brevet français FR-A-2 543 320, FR-A-2 548 795 et FR-A-2 553 906 déposées au nom de THOMSON-CSF respectivement les 23 Mars, 4 Juillet et 21 Octobre 1983.

L'article de Richard A. SOREF, publié dans la revue APPLIED OPTICS, vol. 21, n°8, avril 1982, décrit un sélecteur optique 1 X 4, c'est-à-dire à une entrée et quatre sorties, réalisé par la mise en cascade de cellules de commutation optique élémentaires à cristaux liquides, et fonctionnant par réflexions successives d'un faisceau lumineux depuis une cellule d'entrée jusqu'à une cellule de sortie à travers laquelle il est transmis. De même, la demande de brevet français n°83 16 793 précitée décrit un sélecteur optique de ce type, réalisé avec des cellules de commutation élémentaires fonctionnant par déplacement d'une goutelette de liquide entre deux lames de verre sous l'effet d'un champ électrique.

Dans les deux cas, ces cellules sont disposées de façon linéaire et le passage d'une cellule à une cellule adjacente se fait au moyen d'un plan de réflexion auxiliaire parallèle au plan des cellules.

Un telle disposition ne convient cependant pas pour des valeurs de N élevées, en particulier pour des valeurs telles que 32 ou 64 qui sont des valeurs couramment rencontrées en pratique, par exemple dans les réseaux de télédistribution en fibres optiques. En effet l'encombrement du sélecteur dans la direction considérée ainsi que les trajets optiques mis en jeu atteindraient alors des valeurs prohibitives.

Le sélecteur suivant l'invention permet, par une association différente des cellules de commutation optique élémentaires, d'éviter ces inconvénients.

On connaît également par le document US-A-3 612 653 un sélecteur optique à une entrée et N sorties constitué par des cellules de commutation optique élémentaires à une entrée et deux sorties chacune disposées en colonnes selon un axe X et en lignes selon un axe Y; les J cellules de l'une des colonnes sont en cascade et constituent un sélecteur d'entrée. Les autres cellules sont en cascade selon les lignes, et constituent un sélecteur de sortie par ligne, l'axe Z indiquant la direction de sortie. Les cellules du sélecteur d'entrée sont disposées dans des plans perpendiculaires au plan XY et inclinées d'un angle de 45° sur l'axe X. Les K cellules de chaque sélecteur de sortie sont dans des plans perpendiculaires au plan YZ et inclinées d'un angle de 45° sur l'axe Y. Un faisceau lumineux incident selon l'axe X et entrant dans le sélecteur d'entrée est réfléchi par une cellule de celui-ci selon une direction Y, et entre dans un sélecteur de sortie dont une cellule réfléchit le faisceau selon une direction Z, le faisceau sortant du sélecteur optique selon cette direction. La réalisation d'un tel sélecteur optique est délicate, les J cellules du sélecteur d'entrée étant dans J plans différents, et les cellules des J sélecteurs de sortie étant dans K plans différents.

Les objets et caractéristiques de la présente invention apparaîtront plus clairement à la lecture de la description suivante d'un exemple de réalisation, faite en relation avec les dessins ci-annexés, dans lesquels:

- La figure 1 est un schéma de principe d'un sélecteur optique suivant l'invention.
- Les figures 2a et 2b représentent de manière schématique un exemple de cellule élémentaire de commutation optique particulièrement adapté à la réalisation d'un sélecteur optique suivant l'invention.
- La figure 3 est une vue en perspective d'un sélecteur optique suivant l'invention.
- La figure 4 est une vue en plan des moyens de renvoi sélectif, destinée à mieux faire comprendre leur fonctionnement.

La description qui suit est faite à titre d'exemple pour une valeur de K égale à J.

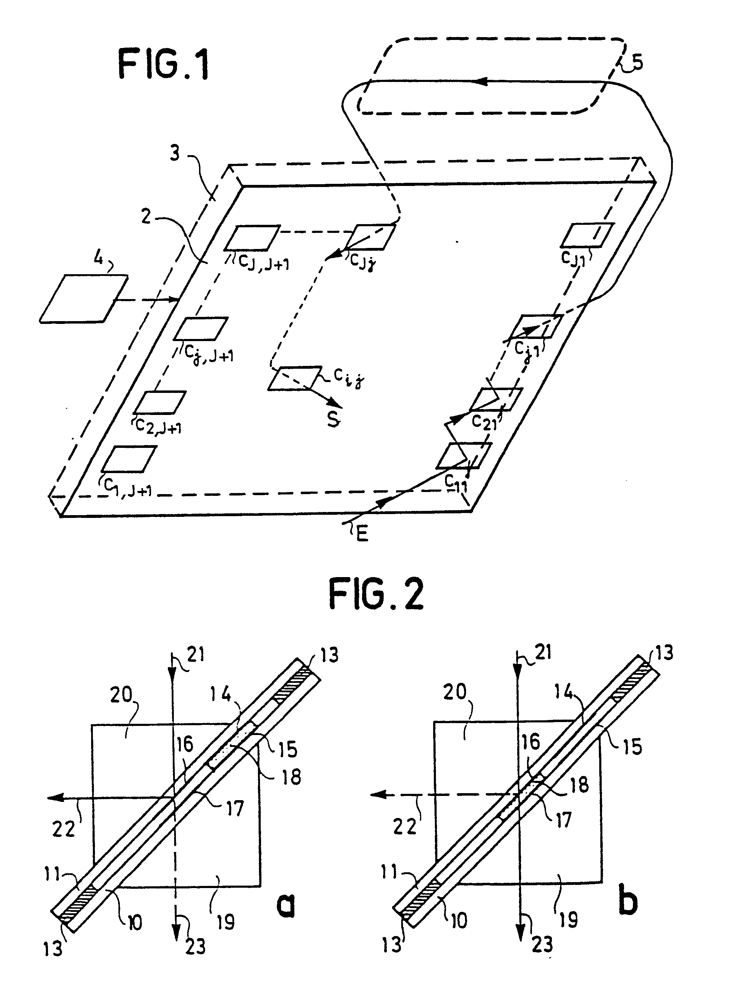

Le sélecteur optique représenté sur la figure 1 comporte des cellules de commutation optique élémentaires disposées dans un même plan 2 parallèle à un plan de réflexion auxiliaire 3 (représenté en pointillés), suivant une matrice à J lignes et J + 1 colonnes, chaque cellule $C_{ij}$ étant définie par son numéro de ligne i (avec $1 \leqslant i \leqslant J$) et par son numéro de colonne j (avec $1 \leqslant j \leqslant J$

+ 1).

La première colonne de cellules (correspondant à j = 1) constitue un sélecteur, dit sélecteur d'entrée, à une entrée et à J sorties, l'entrée de ce sélecteur optique étant à titre d'exemple l'entrée de la cellule $C_{11}$.

Chaque colonne de cellules autre que la première (correspondant à j quelconque ≠ 1) constitue également un sélecteur, dit sélecteur de sortie, à une entrée, qui est à titre d'exemple l'entrée de la cellule $C_{Jj}$, et à J sorties.

L'ensemble des sorties des J sélecteurs de sortie forme l'ensemble des sorties du sélecteur optique, soit un nombre total de sorties N égal à $J^2$.

Les cellules $C_{ij}$ opèrent par exemple par réflexion ou par transmission d'un faisceau lumineux incident, suivant la commande qui leur est individuellement appliquée. Chaque cellule $C_{ij}$ reçoit pour cela une commande fournie par des moyens de commande 4, ce qui a été représenté très schématiquement sur la figure 1 par une seule commande pour l'ensemble des cellules. Ces moyens de commande ne constituent pas l'objet de la présente demande de brevet et ne sont donc pas décrits de manière plus détaillée.

Le sélecteur optique représenté sur la figure 1 comporte également des moyens de renvoi sélectif 5 pour renvoyer directement le faisceau obtenu sur la $j^{ième}$ sortie du sélecteur d'entrée vers l'entrée du $j^{ième}$ sélecteur de sortie (avec j quelconque compris entre 1 et J) sur lequel se trouve la cellule de sortie $C_{ij}$ choisie, sans avoir à parcourir les colonnes 2 à j-1, ce qui permet de minimiser le trajet optique reliant la cellule d'entrée $C_{11}$ à une cellule de sortie $C_{ij}$ quelconque.

On explique maintenant la propagation du faisceau lumineux de la cellule d'entrée $C_{11}$ jusqu'à la cellule de sortie $C_{ij}$.

Les cellules $C_{11}$, $C_{21}$... etc... $C_{j1}$ du sélecteur d'entrée sont commandées de manière à assurer une propagation du faisceau lumineux par réflexions successives sur les cellules $C_{11}$ à $C_{j-1,1}$ puis par transmission à travers la cellule $C_{j1}$.

Les moyens de renvoi sélectif 5 sont disposés de manière à réfléchir le faisceau obtenu sur la $j^{ième}$ sortie du sélecteur d'entrée, c'est-à-dire le faisceau transmis par la cellule $C_{j1}$, vers l'entrée du $j^{ième}$ sélecteur de sortie, c'est-à-dire vers l'entrée de la cellule $C_{Jj}$.

Les cellules $C_{Jj}$, $C_{J-1,j}$... etc... $C_{ij}$ du $j^{ième}$ sélecteur de sortie sont ensuite commandées de manière à assurer une propagation du faisceau lumineux par transmission à travers la cellule $C_{Jj}$ puis par réflexions successives sur les cellules $C_{J-1,j}$ à $C_{i+1,j}$, et enfin par transmission à travers la cellule $C_{ij}$.

Les figures 2a et 2b sont des vues schématiques en coupe transversale d'un exemple de cellule élémentaire de commutation optique particulièrement adapté à la réalisation d'un sélecteur optique suivant l'invention, fonctionnant par déplacement d'une gouttelette de liquide entre deux lames de verre sous l'effet d'un champ électrique, et ayant fait l'objet des demandes de brevet précitées.

Cette cellule comprend deux plaques rigides de confinement 10 et 11, par exemple en verre, délimitant l'espace capillaire défini par des cales 13. Les faces internes des plaques 10 et 11 ont subi une préparation qui consiste en des nettoyages appropriés et des dépôts de surface qui doivent éviter la formation de films capillaires par un liquide dont on souhaite contrôler électriquement le déplacement, les électrodes de commande sont constituées du couple d'électrodes 14 et 15 et du couple d'électrodes 16 et 17. Elles sont reliées à un générateur de tension (non représenté) susceptible de fournir une différence de potentiel entre les électrodes de chaque couple. La cellule comprend un globule 18 apte à se déplacer dans un fluide qui peut être de l'air. Le globule 18 est choisi parmi les hydrocarbures tels que des alcanes comprenant de 5 à 25 atomes de carbone, des cétones ou des dérivés nitrés. Sur les faces extérieures des plaques 10 et 11 sont collés des prismes à réflexion totale 19 et 20. Un faisceau lumineux 21 est envoyé sous incidence oblique en direction de l'électrode 16. L'obliquité du faisceau 21 est choisie de façon à permettre la possibilité d'une réflexion totale sur la face interne de la lame 11. Le faisceau 21 traverse le prisme 20 et parvient sur la face interne de la lame 11. Deux cas peuvent alors se produire suivant la nature du fluide compris entre les électrodes 16 et 17.

Le faisceau 21 est réfléchi en un faisceau 22 lorsque le volume contrôlé par les électrodes 16 et 17 est occupé par un gaz tel que l'air dont l'indice de réfraction optique est de l'ordre de 1, alors que celui du verre de la lame 11 est de l'ordre de 1,5. C'est ce qui est représenté à la figure 2a.

Si le volume contrôlé par les électrodes 16 et 17 est occupé par le globule 18 initialement situé entre les électrodes 14 et 15, l'indice de réfraction de cette région passe à une valeur qui est typiquement comprise entre 1,4 et 1,7. Dans ces conditions, la réflexion totale sur la face interne de la lame de verre 11 est supprimée et le faisceau 21 est transmis en un faisceau 23 comme le montre la figure 2b.

La commande électrique du dispositif représenté aux figures 2a et 2b se fait de la façon suivante. Sans excitation électrique, le globule reste dans la position où il se trouve et le faisceau 21 est réfléchi en un faisceau 22 (c'est par exemple le cas de la figure 2a). Si l'on applique une différence de potentiel entre les électrodes 16 et 17 et que le champ électrique qui y est alors induit est suffisant, le globule vient se placer entre ces électrodes et y restera après suppression du champ électrique. Le faisceau 21 est alors transmis en un faisceau 23. Pour que le globule reparte entre les électrodes 14 et 15, il faut inverser le processus de commande.

Le sélecteur suivant l'invention peut également être réalisé avec des cellules de commutation optique élémentaires basées sur tout autre principe, par exemple avec des cellules à déplacement de prismes à miroirs, ou avec des cellules à cristaux liquides.

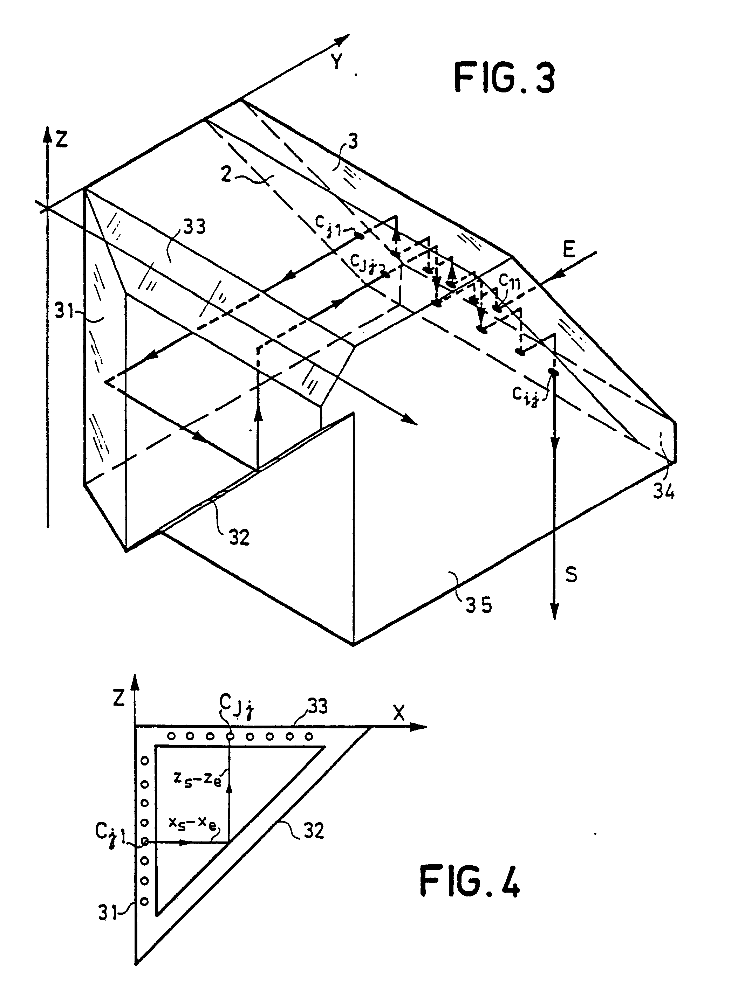

Sur la figure 3, on à représenté une vue en perspective d'un sélecteur optique suivant l'invention, dans un repère orthogonal (X, Y, Z) dont les axes (X, Y) forment un plan horizontal. Le plan 2 des cellules de commutation optique élémentaires est incliné d'un angle α par rapport au plan (X, Y), l'angle α étant, dans une variante préférée de réalisation, égal à 45°, ce qui permet d'avoir un faisceau lumineux entrant E horizontal.

Les cellules $C_{ij}$ sont disposées dans le plan 2 suivant une matrice à J lignes et J+1 colonnes, comme cela a été décrit en relation avec la figure 1. A titre d'exemple, la valeur J peut être choisie égale à 8. Pour une plus grande clarté du dessin, seules les cellules intervenant dans un exemple de trajet optique ont été représentées, cet exemple correspondant au trajet d'un faisceau lumineux de la cellule d'entrée $C_{11}$ vers la cellule de sortie $C_{ij}$, successivement à travers les cellules $C_{11}$ à $C_{ij}$ du sélecteur d'entrée, puis les moyens de renvoi optique sélectif, et enfin les cellules $C_{Jj}$ à $C_{ij}$ du sélecteur de sortie.

Chaque ligne de cellules peut être définie par sa coordonnée z suivant l'axe Z et chaque colonne de cellules par sa coordonnée x suivant l'axe X. Avec l'orientation des axes montrée sur la figure 3, la première colonne de cellules (correspondant à la valeur j égale à 1) est celle qui à la coordonnée x la plus faible, de sorte qu'un renvoi du faisceau lumineux vers les colonnes suivantes nécessite un déplacement du faisceau dans le sens des x croissants.

De même la première ligne de cellules (correspondant à la valeur i égale à 1) est celle qui à la coordonnée z la plus faible, de sorte qu'une propagation du faisceau dans la première colonne, de la cellule $C_{11}$ vers la cellule $C_{j1}$ se traduit par un déplacement du faisceau dans le sens des z croissants (ou montée), et la propagation du faisceau dans la $j^{ième}$ colonne, de la cellule $C_{Jj}$ vers la cellule de sortie $C_{ij}$ se traduit par un déplacement du faisceau dans le sens des z décroissants (descente).

Le faisceau lumineux d'entrée E, parallèle à l'axe Y, est reçu par la cellule d'entrée $C_{11}$ qui, en raison de l'inclinaison à 45° du plan 2, réfléchit ce faisceau dans une direction parallèle à l'axe Z, les réflexions successives sur des cellules adjacentes d'une même colonne se faisant ainsi alternativement suivant des directions parallèles aux axes Y et Z, c'est-à-dire en marches d'escalier.

Les moyens de renvoi sélectif comportent trois plans de réflexion 31, 32, 33 formant un tronc de pyramide triangulaire, le premier, 31, étant disposé en regard du sélecteur d'entrée, c'est-à-dire en regard de la première colonne, et le troisième, 33, étant disposé en regard des cellules d'entrée des sélecteurs de sortie, c'est-à-dire en regard de la $J^{ième}$ ligne.

Suivant une forme préférée de réalisation, correspondant à un plan 2 incliné de 45° par rapport au plan (X, Z), la base de cette pyramide est un triangle rectangle isocèle dont l'hypothénuse est située sur le deuxième miroir 32.

Lorsque les cellules de commutation élémentaires sont du type décrit en relation avec les figures 2a et 2b, les faces 34 et 35 assurent la fonction remplie par les N prismes élémentaires 19 et 20, qui deviennent alors inutiles.

On désigne maintenant par $(x_e, z_e)$ les coordonnées suivant X et Z de la cellule de sortie $C_{j1}$ du sélecteur d'entrée et par $(x7'_s, z_s)$ les coordonnées suivant X et Z de la cellule d'entrée $C_{Jj}$ du sélecteur de sortie sélectionné par les moyens de renvoi sélectif.

Les trois plans de réflexion (31, 32, 33) sont disposés de manière à faire parcourir au faisceau lumineux obtenu sur la cellule de sortie $C_{j1}$ du sélecteur d'entrée le trajet suivant: un premier trajet suivant la direction Y, d'une longueur $y_0$ quelconque, entre la cellule $C_{j1}$ et le premier plan de réflexion 31, un deuxième trajet suivant la direction X, d'une longueur égale à $x_s - x_e$, entre le premier plan de réflexion 31 et le deuxième plan de réflexion 32, un troisième trajet suivant la direction Z, d'une longueur égale à $z_s z_e$, entre le deuxième plan de réflexion 32 et le troisième plan de réflexion 33, et un quatrième trajet suivant la direction Y, de la même longueur $y_0$ que précédemment, entre le troisième plan de réflexion 33 et la cellule $C_{Jj}$.

Sur la figure 4, on à représenté une projection de ces trois plans de réflexion dans le plan (X, Z) ainsi qu'une projection dans ce plan des cellules de commutation appartenant à la première colonne et à la $J^{ième}$ ligne. Cette figure fait apparaître les trajets ainsi parcourus par le faisceau lumineux, dans le plan (X, Z), entre le premier et le troisième plans de réflexion.

Cette forme de réalisation des moyens de renvoi sélectif à pour avantage d'être monolithique et particulièrement simple à réaliser. D'autres formes de réalisation pourraient bien entendu être envisagées.

Le sélecteur représenté sur la figure 3 revêt ainsi globalement la forme d'un prisme dont deux faces sont équipées l'une avec les cellules de commutation optique élémentaires $C_{ij}$, l'autre avec le tronc de pyramide triangulaire 31, 32, 33 que constituent les moyens de renvoi sélectif. Ce prisme peut être réalisé dans un matériau quelconque, transparent aux longueurs d'onde utilisées.

Compte tenu de la réversibilité des trajets optiques, le sélecteur suivant l'invention peut aussi bien permettre d'aiguiller un faisceau lumineux reçu sur une entrée, vers une sortie choisie parmi N, que de sélectionner une entrée parmi N possibles vers une sortie unique.

## Revendications

1. Sélecteur optique à une entrée et N sorties, du type à cellule de commutation optique élémentaires ($C_{ij}$) à une entrée et deux sorties disposées en lignes et colonnes, comportant un sélecteur optique d'entrée, à une entrée et J sorties, réalisé par la mise en cascade de J cellules de commutation optique élémentaires, et dont l'entrée constitue l'entrée de sélecteur optique, J sélecteurs optiques de sortie, ayant chacun une entrée et K sorties, et réalisés chacun par la mise en cascade de K cellules de commutation élémentaires, l'ensemble des sorties des sélecteurs de sortie formant les N sorties du sélecteur optique, caractérisé par le fait que les cellules de commutation optique élémentaires du sélecteur optique d'entrée et des sélecteurs optiques de sortie sont toutes disposées dans un même plan (2) selon une matrice, et que le sélecteur optique à une entrée et N sorties comporte un plan de réflexion auxiliaire (3) parallèle audit plan (2) de la matrice pour la mise en cascade des cellules élémentaires de chaque sélecteur, et des moyens de renvoi sélectif (5) pour renvoyer le faisceau lumineux obtenu sur la $j^{ième}$ sortie du sélecteur optique d'entrée (avec j quelconque, de 1 à J) vers l'entrée du $j^{ième}$ sélecteur optique de sortie.

2. Sélecteur optique selon la revendication 1, caractérisé par le fait que les colonnes de la matrice correspondent aux différents sélecteurs, et les lignes aux différentes cellules élémentaires constitutives de ces sélecteurs.

3. Sélecteur optique suivant la revendication 2, dans lequel chacune des lignes de la matrice est définie par sa coordonnée z suivant un axe Z, et chacune des colonnes de la matrice par sa coordonnée x suivant un axe X orthogonal à Z, caractérisé en ce que les moyens de renvoi sélectif comportent des moyens pour faire parcourir au faisceau obtenu sur la cellule de sortie du sélecteur d'entrée un premier trajet d'une longueur $y_0$ quelconque suivant une direction Y orthogonale au plan (X, Z), un deuxième trajet d'une longueur $x_s - x_e$ suivant la direction X, un troisième trajet d'une longueur $z_s - z_e$ suivant la direction Z, et un quatrième trajet d'une longueur $y_0$ suivant la direction Y, où ($x_e$, $z_e$) désignent les coordonnées de la cellule de sortie du sélecteur d'entrée et ($x_s$, $z_s$) les coordonnées de la cellule d'entrée du sélecteur de sortie.

4. Sélecteur selon la revendication 3, caractérisé en ce que les moyens de renvoi sélectif (5) comportent trois plans de réflexion (31, 32, 33) formant un tronc de pyramide triangulaire, l'un d'eux (31) étant disposé en regard des sorties du sélecteur d'entrée, et un autre (33) étant disposé en regard des entrées des sélecteurs de sortie.

5. Sélecteur suivant l'une des revendications 1 à 4, caractérisé en ce que les cellules de commutation optique élémentaires fonctionnent par déplacement d'une gouttelette de liquide entre deux lames de verre sous l'effet d'un champ électrique.

## Patentansprüche

1. Optischer Wähler mit einem Eingang und N Ausgängen vom Typ der optischen Elementarschaltzelle ($C_{ij}$) mit einem Eingang und zwei zeilen- und spaltenmäßig angeordneten Ausgängen, wobei der Wähler einen optischen Eingangswähler mit einem Eingang und J Ausgängen, der durch Kaskadenanordnung von J optischen Elementarschaltzellen gebildet ist und dessen Eingang der Eingang des optischen Wählers ist, und J optische Ausgangswähler aufweist, die je einen Eingang und K Ausgänge besitzen und durch Kaskadenschaltung von K Elementarschaltzellen gebildet sind, wobei die Gesamtheit der Ausgänge der Ausgangswähler die N Ausgänge des optischen Wählers bilden, dadurch gekennzeichnet, daß die optischen Elementarschaltzellen des optischen Eingangswählers und der optischen Ausgangswähler sämtlich in Matrixform in einer gemeinsamen Ebene (2) angeordnet sind, und daß der optische Wähler mit einem Eingang und N Ausgängen eine parallel zur Ebene (2) der Matrix liegende Hilfsreflexionsebene (3) für die Kaskadenanordnung der Elementarzellen jedes Wählers sowie Mittel (5) zum selektiven Anschluß des am j-ten Ausgang des optischen Eingangswählers (bei beliebigem j von 1 bis 3) erhaltenen Lichtstrahls an den Eingang des j-ten optischen Ausgangswählers aufweist.

2. Optischer Wähler nach Anspruch 1, dadurch gekennzeichnet, daß die Spalten der Matrix den verschiedenen Wählern und die Zeilen den verschiedenen diese Wähler bildenden Elementarzellen entsprechen.

3. Optischer Wähler nach Anspruch 2, bei dem jede Zeile der Matrix durch ihre z-Koordinate auf eine Z-Achse und jede Spalte der Matrix durch ihre x-Koordinate auf einer zu Z senkrechten X-Achse definiert ist, dadurch gekennzeichnet, daß die Mittel zum selektiven Anschluß Mittel aufweisen, die den an der Ausgangszelle des Eingangswählers erhaltenen Strahl, einen ersten Pfad von beliebiger Länge $y_0$ in Y-Richtung, die auf der Ebene (X, Z) senkrecht steht, einen zweiten Pfad von der Länge $x_s - x_e$ in X-Richtung, einen dritten Pfad von der Länge $z_s - z_e$ in Z-Richtung, und einen vierten Pfad von der Länge $y_0$ in Y-Richtung durchlaufen lassen, wobei ($x_e$, $z_e$) die Koordinaten der Ausgangszelle des Eingangswählers und ($x_s$, $z_s$) die Koordinaten der Eingangszelle des Ausgangswählers bezeichnen.

4. Wähler nach Anspruch 3, dadurch gekennzeichnet, daß die Mittel zum selektiven Anschluß (5) drei Reflexionsebenen (31, 32, 33) enthalten, welche einen dreieckigen Pyramidenstumpf bilden, wobei eine (31) der Ebenen gegenüber den Ausgängen des Eingangswählers und eine andere (33) gegenüber den Eingängen des Ausgangswählers angeordnet ist.

5. Wähler nach einem der Ansprüche 1 bis 4, dadurch gekennzeichnet, daß die Funktionsweise der optischen Elementarschaltzellen in der Verschiebung eines Flüssigkeitströpfchens zwischen zwei Glasscheiben unter der Wirkung eines elektrischen Felds besteht.

**Revendications**

1. An optical selector having one inlet and N outlets, the selector being of the type having elementary optical switching cells ($C_{ij}$) each having one inlet and two outlets disposed in rows and columns, and comprising an inlet optical selector having one inlet and J outlets, constituted by cascading J elementary optical switching cells, with the inlet to one of them constituting the inlet to the optical selector, and J outlet optical selectors each having one inlet and K outlets and each constituted by a cascade of K elementary switching cells, with the set of outlets from the outlet selectors constituting the N outlets from the optical selector, the selector being characterized by the fact that the elementary optical switching cells of the inlet optical selector and of the outlet optical selectors are all disposed in a common plane (2) in a matrix, and that the optical selector having one inlet and N outlets includes an auxiliary reflection plane (3) parallel to said plane (2) of the matrix for putting the elementary cells of each selector into cascade, and selective return means (5) for returning the light beam obtained from the j-th outlet of the inlet optical selector (with j having any value in the range 1 to J) to the inlet of the j-th outlet optical selector.

2. An optical selector according to claim 1, characterized by the fact that the columns of the matrix correspond to different selectors, and that the rows correspond to different elementary cells constituting said selectors.

3. An optical selector according to claim 2, in which each of the rows of the matrix is defined by its z co-ordinate along a Z axis, and each of the columns of the matrix is defined by its x co-ordinates along a X axis orthogonal to the Z axis, the selector being characterized in that the selective return means comprise means for causing the beam obtained from the outlet cell of the inlet selector to follow a first path of arbitrary length $y_0$ in a Y direction which is orthogonal to the plane (X, Z), a second path of length $x_s - x_e$ along the X direction, a third path of length $z_s - z_e$ along the Z direction, and a fourth part of length $y_0$ along the Y direction, where ($x_e$, $z_e$) designates the co-ordinates of the outlet cell of the inlet selector, and ($x_s$, $z_s$) designates the coordinates of the inlet cell to the outlet selector.

4. A selector according to claim 3, characterized in that the selective return means (5) comprise three reflection planes (31, 32, 33) constituting a truncated triangular pyramid, one of the planes (31) being disposed facing the outlets of the inlet selector, and another of the planes (33) being disposed facing the inlet of the outlet selectors.

5. A selector according to any one of claims 1 to 4, characterized in that the elementary optical switching cells operate by displacing a drop of liquid between two plates of glass under the effect of a magnetic field.

# FIG.1

# FIG.2

FIG. 3

FIG. 4